**Europäisches Patentamt**

**European Patent Office**

**Office européen des brevets**

(11) Veröffentlichungsnummer: **0 163 898**
**A2**

# EUROPÄISCHE PATENTANMELDUNG

(21) Anmeldenummer: **85104881.9**

(22) Anmeldetag: **22.04.85**

(51) Int. Cl.⁴: **H 04 N 1/41**

(30) Priorität: **27.04.84 DE 3415763**

(43) Veröffentlichungstag der Anmeldung: **11.12.85**
**Patentblatt 85/50**

(84) Benannte Vertragsstaaten: **AT CH DE FR GB IT LI SE**

(71) Anmelder: **Siemens Aktiengesellschaft, Berlin und München Wittelsbacherplatz 2, D-8000 München 2 (DE)**

(72) Erfinder: **Postl, Wolfgang, Dipl.-Ing., Edelweissstrasse 11, D-8137 Berg (DE)**

(54) **Verfahren zur Codierung von Faksimiles.**

(57) Ein Verfahren zur Codierung von Faksimiles, die bei der Abtastung von Vorlagen gewonnen werden, die auch Halbtonbereiche ($H_i$) enthalten, bei welchem Verfahren insbesondere zum Zwecke der Beseitigung von Moiré und/oder zum Zwecke einer Datenkompression eine einer gegenüber der Vorlage unschärferen Abbildung entsprechende Codierung der Halbtonbereiche ($H_i$) derart durchgeführt wird, daß das sog. Halbtonraster unterdrückt wird. Das Verfahren sieht vor, daß innerhalb jeweils eines Halbtonbereiches ($H_i$) ein Detailbereich ($D_i$) bestimmt und mit einem «Detailcode» codiert wird und daß zumindest der Restbereich des Halbtonbereiches ($H_i$) mit einem «Unscharfcode» codiert wird. Das Verfahren bietet den Vorteil der Möglichkeit einer verbesserten Detailwiedergabe bei gleichzeitiger Unterdrückung eines Moiré und einer guten Datenkompression.

0163898

SIEMENS AKTIENGESELLSCHAFT
Berlin und München

München, den
84 P 1 3 3 7 E

## Verfahren zur Codierung von Faksimiles

Die vorliegende Erfindung betrifft ein Verfahren zur Codierung von Faksimiles, die bei der Abtastung von Vorlagen gewonnen werden, die Halbtonbereiche enthalten, mit dem Ziel einer optimalen Übertragung und/oder Speicherung der betreffenden Informationsdaten.

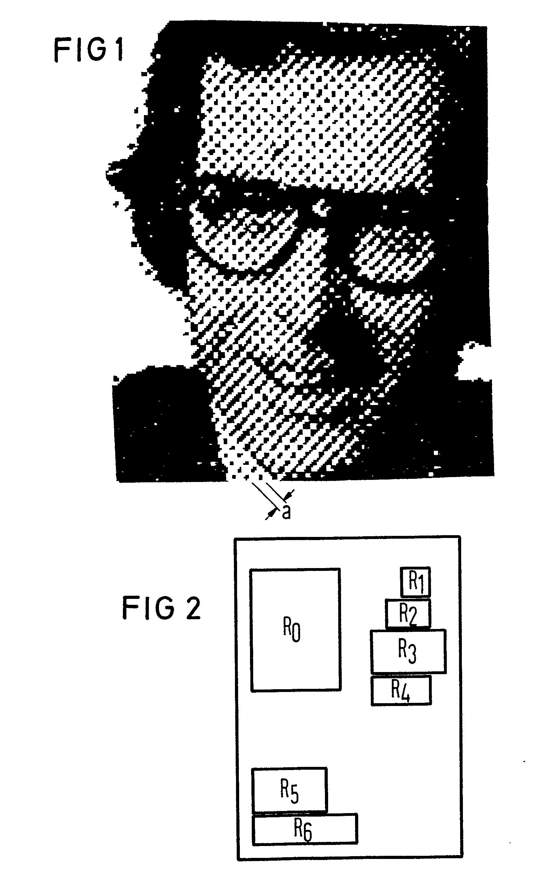

Fig. 1 zeigt einen um etwa den Faktor 7 vergrößerten Ausschnitt aus dem Faksimile eines in einer Tageszeitung erschienenen zweifarbigen Halbtonbildes. Man erkennt darin ein um 45° gegen die Blattkanten geneigtes Rechteckmuster aus schwarzen Punkten unterschiedlicher Größe und Form, die in dunklen Bereichen ineinanderfließen und selbst aus einer Anhäufung quadratischer Flächenelemente bestehen, die Faksimile-Abtastpunkten entsprechen. Im Original beträgt der Mittenabstand zweier Halbtonrasterpunkte (a) 0,4 mm und der Mittenabstand zweier Abtastpunkte 0,075 mm.

In der gleichen Weise können farbige Halbtonbilder gedruckt werden, wenn sie monochrom sind, d.h. nur aus einer einzigen Farbe mit lokal veränderlicher Sättigung bestehen. In diesem Fall müßten die schwarzen Punkte durch Punkte der jeweiligen Farbe ersetzt werden.

Bunte Halbtonbilder (d.s. Bilder, die mehrere Farbtöne enthalten) sowie monochrome Halbtonbilder, deren Farbe nicht als Druckfarbe verfügbar ist, werden durch Übereinanderdrucken von gewöhnlich vier Mustern unterschiedlicher Neigung und Rasterdichte in den Farben Gelb, Magenta, Cyan und Schwarz hergestellt. Bei der Übertragung oder Speicherung und nachträglichen Reproduktion von Faksimiles, die Halbtonbilder enthalten, ergeben sich Probleme, insbesondere eine Störung durch Moiré und eine unbefriedigende Datenkompression, die in "Proc. of the 6th International Conference on Pattern Recognition, Munich 1982, pp. 489-491, Postl, W.: Halftone Recognition by an Experimental Text and Facsimile Workstation" eingehender erläutert sind.

Aus der DE-OS 2 516 322 und der DE-OS 3 024 322 sind Verfahren bekannt, durch die in einem Faksimile von Halbtonbildern bedeckte Bereiche mittels automatischer Verfahren gesucht und die gefundenen Bereiche mit einem sogenannten Bildcode codiert werden, für die übrigen Bereiche jedoch ein sogenannter Textcode verwendet wird, wobei unter "Bildcode" und "Textcode" Codes verstanden werden, die für die jeweiligen Strukturen besonders geeignet sind.

Als Bildcode wird in der DE-OS 2 516 322 im besonderen eine Abtastung mit reduzierter Auflösung vorgeschlagen – d.i. in anderen Worten eine Transformation der Abtastwerte, die einer unscharfen optischen Abbildung entspricht – deren Auflösung bzw. Unschärfe so zu bemessen ist, daß das Halbtonraster unterdrückt wird, gefolgt von einer Codierung der transformierten Abtastwerte durch Delta-Pulscodemodulation (DPCM) oder einen anderen zur Codierung von Fernsehsignalen geeigneten Code.

Als Textcode werden in der zuvor genannten Druckschrift alle zur Codierung zweifarbiger Muster geeigneten Codes in Betracht gezogen. Solche Codes sind in den Druckschriften "Standardization of Group 3 Facsimile Apparatus for Document Transmission T4, CCITT Yellow Book 1981, p. 232-236" und "Draft Recommendation T.b (2nd issue), CCITT Temporary Document No. 28, Geneva 1983" für die Faksimileübertragung spezifiziert worden. Sie eignen sich in gleicher Weise zur Codierung der Faksimiles von Schriftzeichen und von Liniengrafik. Für die Faksimileübertragung von Halbtonbildern sind sie wenig oder überhaupt nicht geeignet.

Mit dem in der DE-OS 2 516 322 beschriebenen Codierverfahren, das auf vordefinierte Halbtonbereiche ebenso wie auf automatisch gefundene angewendet werden kann, wird einerseits ein günstiger Kompressionsfaktor erreicht und andererseits (worauf in dieser Druckschrift nicht ausdrücklich hingewiesen wird) Moiré vermieden. Das Verfahren hat jedoch den Nachteil, daß dabei Details, deren Ausdehnung in der Größenordnung des Abstands der Halbtonrasterpunkte oder darunter liegt (z.B. dünne Linien, Kanten oder im Bild gedruckte kleine Schriftzeichen) verschwinden oder undeutlich werden, obgleich sie mit dem Auge im ursprünglichen Faksimile noch deutlich erkennbar wären.

Der vorliegenden Erfindung liegt die Aufgabe zugrunde, ein Verfahren der eingangs genannten Art zu schaffen, das bei optimaler Detailwiedergabe und maximaler Datenkompression eine Moiré-Bildung verhindert oder zumindest wesentlich einschränkt.

Die der vorliegenden Erfindung zugrundeliegende Aufgabe wird durch ein Verfahren der eingangs genannten Art und nach dem Oberbegriff des Patentanspruchs 1, das durch die in dessen kennzeichnenden Teil angegebenen Merkmale charakterisiert ist, gelöst.

0163898
84 P 1 337 E

Vorteilhafte Weiterbildungen der vorliegenden Erfindung sind durch die in den Unteransprüchen angegebenen Merkmale gekennzeichnet.

Die vorliegende Erfindung geht von derselben Zielsetzung und dem gleichen Verfahrensprinzip aus wie das in der DE-OS 2 516 322 beschriebene Verfahren, vermeidet jedoch den
erwähnten Nachteil dadurch, daß ein detailintensiver Teilbereich (Detailbereich) innerhalb
des zu codierenden Halbtonbereichs entweder vorgegeben oder automatisch gefunden und
mit einem sogenannten Detailcode codiert wird, während der Restbereich mit einem sogenannten Unscharfcode codiert wird, vorzugsweise einer unscharfen Transformation mit
folgender DPCM.

Im folgenden wird die vorliegende Erfindung anhand mehrerer, die Problemstellung bzw.
Ausführungsbeispiele für die Erfindung betreffender Figuren im einzelnen beschrieben.

Fig. 1    zeigt, wie bereits erläutert, einen um etwa den Faktor 7 vergrößerten Ausschnitt
aus dem Faksimile eines in einer Tageszeitung erschienenen zweifarbigen
(schwarz/weißen) Halbtonbildes.

Fig. 2    zeigt schematisch ein Faksimile mit sieben eingezeichneten Rechteckbereichen
$R_0..R_6$.

Fig. 3    zeigt einen Halbtonbereich $H_i$ innerhalb eines Rechteckbereichs $R_i$ in vergrößerter
Darstellung.

Fig. 4    zeigt einen Ausschnitt (den Bereich der linken oberen Ecke) des in Fig. 3 dargestellten Rechteckbereichs $R_i$ mit einem Ausschnitt aus einem angrenzenden Rechteckbereich $R_{i-1}$.

Fig. 5    zeigt ein schematisches Blockschaltbild eines bevorzugten Ausführungsbeispiels
für eine Einrichtung zur Durchführung des erfindungsgemäßen Verfahrens.

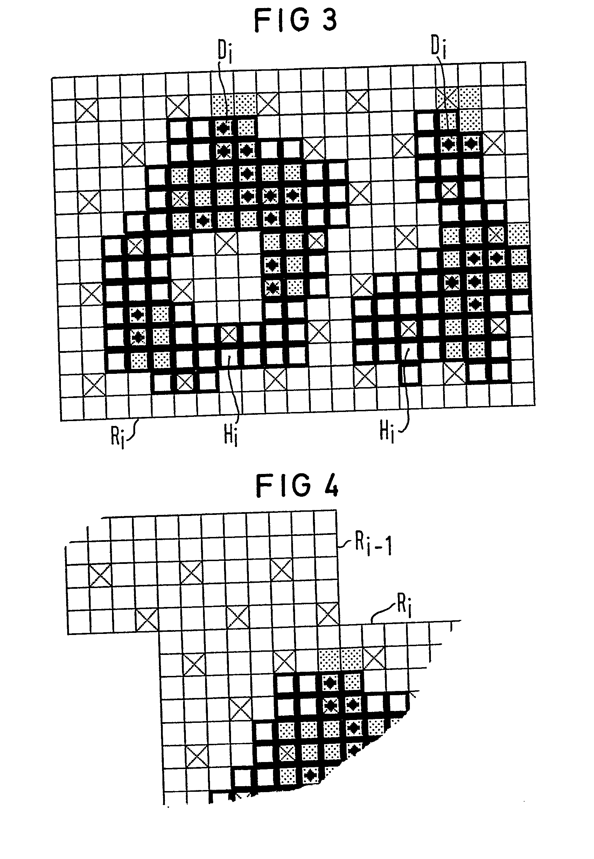

Ein Beispiel für die Codierung des in Fig. 3 dargestellten Halbtonbereichs ist am Schluß
dieser Beschreibung unter "Codierbeispiel" angegeben.

0163898

84 F 1 3 3 7 E

In der im folgenden gegebenen Beschreibung werden die beiden bereits erwähnten Codier-vorgänge als Detail- bzw. Unscharfcodierung bezeichnet.

Varianten der Erfindung werden im folgenden für die Codierung sowohl monochromer als auch bunter Halbtonbereiche in Faksimiles beschrieben. Es wird hierbei vorausgesetzt, daß die Lage dieser Bereiche durch die Lage von Rechteckbereichen $R_i$ $(i=0..n-1)$ gegeben ist, in denen die jeweiligen i.allg. nicht zusammenhängenden Halbtonbereiche $H_i$ $(i=0..n-1)$ enthalten sind.

Fig. 2 stellt – wie bereits erläutert – schematisch ein Faksimile mit sieben eingezeichneten Rechteckbereichen $R_0..R_6$ dar. Die Codierung der Lage der $R_i$ kann beispielsweise durch Angabe der Koordinaten jeweils der linken oberen und der rechten unteren Ecke eines $R_i$ in einem vorgegebenen Format oder nach den in der Druckschrift "Draft Recommendation S.a, CCITT 1982" definierten Vorschriften erfolgen, die Codierung der Konturen der Halbtonbe-reiche $H_i$ – sofern sie bekannt sind und nicht mit den Grenzen der umschriebenen Rechteckbereiche übereinstimmen – mittels eines sogenannten Konturcode. Ein Beispiel für einen solchen Code wird unten angegeben. Sind die Grenzen eines $H_i$ nicht angegeben, so wird Übereinstimmung von $H_i$ mit $R_i$ angenommen. Es ist ggf. auch sinnvoll, im Falle bekannter Grenzen von $H_i$ den Restbereich von $R_i$ mit einer einheitlichen Farbe, insbesondere weiß, zu besetzen und die weitere Codierung unter der Annahme vorzunehmen, daß $H_i$ mit $R_i$ identisch ist.

Die folgende Beschreibung verschiedener Verfahrensmerkmale beschränkt sich auf die Codierung eines der Halbtonbereiche $H_i$.

Codierung eines Halbtonbereichs $H_i$:

Der umschriebene Rechteckbereich $R_i$ enthalte in Z Zeilen und S Spalten $S \times Z$ Flächenelemente, die durch ebensoviele Abtastwerte $A(x,y)$ dargestellt werden, die von einem Faksimileabtaster oder ggf. einer Einrichtung, die einen solchen Abtaster simuliert, der Codiereinrichtung zur Verfügung gestellt werden. Die Zahlen x und y bezeichnen die Koordinaten des Abtastwerts und sind von $0..S-1$ bzw. von $0..Z-1$ numeriert.

Fig. 3 zeigt, wie bereits erläutert, einen Halbtonbereich $H_i$ sowie den umschriebenen Recht-eckbereich $R_i$ in vergrößerter Darstellung, wobei die Spaltenzahl S=21 und die Zeilenzahl Z=15 gewählt wurde. Jeweils ein Quadrat des Gitters markiert ein Flächenelement. Flächenelemente, die dem (nicht zusammenhängenden) Halbtonbereich angehören, sind durch Quadrate mit verstärkten Kanten dargestellt. Der Detailbereich ist durch Einzeichnen von verstärkten Punkten in die Mitte der betreffenden Flächenelemente gekennzeichnet.

Der horizontale Abstand benachbarter Flächenelemente wird im folgenden mit dx und der vertikale mit dy bezeichnet. In Fig. 3 sind beide identisch. Im Falle einer Faksimileabtastung gemäß "Standardization of Group 3 Facsimile Apparatus for Document Transmission T4, CCITT Yellow Book 1981, p. 232-236" ist beispielsweise dx= 1/8 mm und dy= 1/7,7 mm.

Die folgende Beschreibung geht von der Annahme aus, daß jeder Abtastwert $A(x,y)$ in einem Datenspeicher in vorcodierter Form zur Verfügung steht, beispielsweise in Form eines Codeworts von 8 bit Länge, das die Adresse in einer "Lookup-Table" angibt, die an der adressierten Stelle in einem 24-Bit-Codewort die additiven Farbanteile $R(x,y)$, $B(x,y)$ und $G(x,y)$ oder die in der Fernsehtechnik gebräuchlichen Farbparameter $Y(x,y)$, $U(x,y)$ und $V(x,y)$ – von denen $Y(x,y)$ die Luminanz darstellt – mit jeweils 8 bit codiert enthält. Varianten der Codierung von Farbinformation können der Fachliteratur entnommen werden, z.B. "Proc. of the 1984 Internatl. Zurich Seminar on Digital Communication, IEEE Catalog No. 84CH1998-4, pp. 33-38". Die Verwendung von sog. Lookup-Tables ist Stand der Bildverarbeitungstechnik.

Im einfachsten Fall ist $A(x,y)$ mit 1 bit codiert und stellt die Luminanz eines zweifarbigen Musters dar. Falls diese Abtastwerte in einem Kompressionscode z.B. nach "Standardization of Group 3 Facsimile Apparatus for Document Transmission T4, CCITT Yellow Book 1981, p. 232-236" gespeichert sind, können sie zur Verarbeitung durch Decodierung in jede benötigte Form umgesetzt werden.

Unter Farbcodierung wird im folgenden verstanden, daß ein in den Abtastwerten $A(x,y)$ codierte oder aus diesen ableitbare Farbinformation für die Detail- und/oder Unscharfcodierung verwertet wird.

### Verfahren zur Unscharfcodierung:

An ausgewählten Stellen des Rechteckbereichs $R_i$ – sie werden im folgenden als "Mittelpunkte" bezeichnet – werden durch Bildung eines gewichteten Mittelwerts oder durch eine andere sogenannte "unscharfe Transformation", die so bemessen ist, daß das Halbtonraster unterdrückt wird, sogenannte Abtastmittelwerte $AM(x,y)$ erzeugt und anschließend codiert.

0163898
84 P 1 337 E

Die Gesamtheit der dabei erzeugten Codedaten wird als "Unscharf-Codesequenz" US bezeichnet.

Im Falle einer Farbcodierung besteht ein Abtastmittelwert $AM(x,y)$ i.allg. aus mehreren Parametern, z.B. drei Farbmittelwerten $RM(x,y)$, $GM(x,y)$ und $BM(x,y)$, oder drei Werten $YM(x,y)$, $UM(x,y)$ und $VM(x,y)$, die die Mittelwerte der jeweiligen Farbanteile bzw. Farbparameter darstellen, wobei es ggf. vorteilhaft ist, für verschiedene Farbparameter unterschiedliche Unschärfegrade zu realisieren.

Codes zur Codierung der Abtastmittelwerte werden hier nicht spezifiziert. Es können die aus der Fernsehtechnik bekannten Codes Anwendung finden, insbesondere die Delta-Pulscodemodulation (DPCM). Für den Fall eines bunten Faksimile werden folgende Varianten besonders in Betracht gezogen:

a) Es wird nur die Luminanz bzw. $YM(x,y)$ mittels DPCM codiert

b) $RM(x,y)$, $BM(x,y)$ und $GM(x,y)$ werden jeweils mittels DPCM codiert

c) Aus den Abtastmittelwerten $AM(x,y)$ werden – ggf. auf dem Umweg über die additiven Grundfarbmittelwerte $RM(x,y)$, $BM(x,y)$ und $GM(x,y)$ – durch subtraktive Grundfarbmittelwerte $JM(x,y)$, $MM(x,y)$, $CM(x,y)$ und $SM(x,y)$ – die den Farben Gelb, Magenta, Cyan und Schwarz entsprechen – erzeugt und jeweils mit DPCM oder einem anderen Code codiert.

Verfahren zur Erzeugung der subtraktiven aus den additiven Grundfarben sind aus der Drucktechnik bekannt; einen Überblick gibt "Bruckmann's Handbuch der Drucktechnik, Bruckmann München 1981".

<u>Verfahren zur Auswahl der Mittelpunkte für die Unscharfcodierung:</u>

Als Mittelpunkt wird jedes h-te Flächenelement jeder v-ten Zeile ausgewählt, das zumindest im Halbtonbereich $H_i$ enthalten ist. Die Parameter h und v (beide $\geq 1$) sind abhängig von der Art der angewandten unscharfen Transformation so zu wählen, daß eine befriedigende Rekonstruktion des Halbtonbildes aus den codierten Daten möglich ist.

Diese Vorschrift besagt nichts über die gegenseitige Verschiebung aufeinanderfolgender Mittelpunktreihen sowie über die Position der obersten Mittelpunktreihe des Bereichs. Für die gegenseitige Verschiebung kommen zwei Varianten vorrangig in Betracht:

90°-Mittelpunktraster: Aufeinanderfolgende Mittelpunktreihen liegen übereinander. Diese Variante hat den Vorteil, daß Codierverfahren, die ein solches Raster voraussetzen, ohne wesentliche Modifikation übernommen werden können.

45°-Mittelpunktraster: Aufeinanderfolgende Mittelpunktreihen sind um h/2 gegeneinander versetzt. Diese Variante hat den Vorteil einer besseren Approximation des Bildinhalts durch den Unscharfcode bei gleicher Anzahl der Mittelpunkte.

Bei zumindest annähernd identischer Abtastauflösung in Horizontal- und Vertikalrichtung (dx ~ dy) empfiehlt es sich, im ersten Fall v=h und im zweiten Fall v=h/2 zu wählen. Eine dementsprechende Auswahl von Mittelpunkten ist in Fig. 3 (mit h=4) durch Ankreuzen markiert.

Die Position der obersten Mittelpunktreihe wird vorteilhafterweise so gewählt, daß diese Reihe in die Mittelpunktraster vorher oder gleichzeitig bearbeiteter an $R_i$ angrenzender Rechteckbereiche $R_j$ ($j \neq i$) paßt, wie in Fig. 4 angedeutet, die einen Ausschnitt des Bereichs $R_i$ mit einem daran angrenzenden Ausschnitt des Bereichs $R_{i-1}$ einschließlich eingezeichneter Mittelpunkte darstellt.

Dieses Verfahren erleichtert eine stoßfreie Interpolation bei einer späteren Rekonstruktion des Faksimile aus den codierten Daten. Es wird am einfachsten dadurch bewerkstelligt, daß für das gesamte Faksimile für jede Unscharfcodierung mit ansonsten gleichen Parametern ein einheitliches Mittelpunktraster festgelegt wird.

Verfahren zur unscharfen Transformation:

Die Erzeugung der Abtastmittelwerte AM(x,y) – oder entsprechender Farbwerte – erfolgt durch eine gewichtete Mittelung entsprechend folgender Formel:

$$AM(x,y) = 4 \times A(x,y) + 2 \times ((A(x-c,y-c) + A(x-c,y+c) + A(x+c,y-c) + A(x+c,y+c)) + A(x-d,y) + A(x,y-d) + A(x+d,y) + A(x,y+d)$$

Dieser Wert kann nach Bedarf mit einem von x und y unabhängigen Faktor multipliziert werden. Die Distanzen c und d können wie h und v empirisch ermittelt werden. Für ein monochromes quadratisches Halbtonraster (wie in Fig. 1 dargestellt) mit dem Punktabstand a und bei in Horizontal- und Vertikalrichtung identischem oder fast identischem Abtastpunktabstand (dx ~ dy) gelten die Richtwerte

$$c = h/4, d = h/2, h = a/dx \, .$$

Die gleichen Richtwerte gelten, wenn man für a den Abstand der Zentren zweier benachbarter Halbtonrasterpunkte einsetzt, genähert auch für ein hexagonales Halbtonraster. Sie gelten ferner für die einzelnen Farbraster im Falle einer Farbcodierung, wobei nicht notwendigerweise identische Werte von h, c und d für verschiedene Farbraster verwendet werden müssen.

Für die Codierung eines sog. Gruppe-III-Faksimile eines in einer Tageszeitung gedruckten Halbtonbildes mit dem Halbtonrster-Punktabstand a = 0,4 mm und dem Abtastpunktabstand dx = 0,125 mm und dy = 0,130 mm ergibt die zuvor angegebene Abschätzung unganzzahlige Richtwerte; die Rundung dieser Richtwerte auf h=4, c=1, d=2 hat sich als günstig erwiesen. Die zuvor angegebene Formel für AM(x,y) ist jedoch auch für unganzzahlige Koordinaten eines Abtastwerts sinnvoll, obwohl für einen Punkt mit solchen Koordinaten eigentlich weder ein Flächenelement noch ein Abtastwert existiert. In einem solchen Fall ist ein fiktiver Abtastwert A(x',y') – worin x' und y' die Koordinaten des Abtastwerts sind – durch Interpolation zu erzeugen, beispielsweise gemäß folgender Formel:

$$A(x',y') = (Y+1-y') \times ((X+1-x') \times A(X,Y) + (x'-X) \times A(X+1,Y)) +$$
$$+ (y'-Y) \times ((X+1-x') \times A(X,Y+1) + (x'-X) \times A(X+1,Y+1))$$

wobei für X und Y die größten ganzen Zahlen einzusetzen sind, die $\leq x'$ bzw. $\leq y'$ sind.

Gegebenenfalls – insbesondere wenn der ermittelte Wert von h größer als 4 ist – kann es sich unter im übrigen experimentell für bestimmte Halbtonrasterdichten prüfbaren Voraussetzungen als vorteilhaft erweisen, bei der Ausführung der zuvor angegebenen Formel für AM(x,y) anstelle der Abtastwerte A(x',y') – worin x' und y' die jeweiligen Koordinaten bedeuten – eine beschränkt unscharfe Transformation A'(x',y') der Abtastwerte in der Umgebung des Punktes (x',y') zu verwenden, die einer Reduktion der Abtastauflösung um etwa den Faktor h/4 in horizontaler und vertikaler Richtung gleichkommt. Wurde beispielsweise ein Halbtonbereich mit dem Halbtonrasterabstand 0,4 mm mit einem Abtastpunktabstand von 0,0625 mm abgetastet, so empfiehlt sich der Ersatz der Abtastwerte $A(x',y')$ durch Werte $A'(x',y')$ mittels einer beschränkt unscharfen Transformation entsprechend der Formel

$$A'(x',y') = 4*A(x',y') + 2\times((A(x'-1,y') + A(x',y'-1) + A(x'+1,y') + A(x',y'+1)) +$$
$$+ A(x'-1,y'-1) + A(x'-1,y'+1) + A(x'+1,y'-1) + A(x'+1,y'+1))$$

Ist die Halbtonrasterdichte unbekannt, so kann die Codierung mit objektabhängigen Schätzwerten erfolgen. Für illustrierte Zeitschriften beispielsweise ist ein Rasterpunktabstand von 0,15 bis 0,2 mm typisch. Eine andere Möglichkeit ist die automatische Ermittlung des Rasterpunktabstandes, beispielsweise durch Fourieranalyse, die mit einem auf der Auswertung des Fourierspektrums beruhenden Verfahren zum automatischen Auffinden von Halbtonbereichen – wie in DE-OS 3 024 322 beschrieben – verbunden werden kann.

Das oben beschriebene Transformationsverfahren kann wie jede Transformation digital gespeicherter Daten durch ein Computerprogramm realisiert werden. Zur Beschleunigung des Verfahrens empfiehlt sich jedoch die Realisierung durch besondere, vorzugsweise integrierte Schaltungen.

Verfahren zur Detailcodierung:

Die folgende Beschreibung anhand von Fig. 3 geht von der Annahme aus, daß ein Detailbereich (wie in Fig. 3 durch Punkte markiert) entweder bereits automatisch gefunden oder als Vorabinformation dem Coder eingegeben worden ist. Im folgenden werden die im Detailbereich enthaltenen Flächenelemente als Detailelemente, die übrigen im Halbtonbereich $H_i$ enthaltenen Flächenelemente als Grobelemente, und die restlichen in $R_i$ enthaltenen Flächenelemente als Restelemente bezeichnet.

Die Codierung erfolgt durch Erzeugung einer Detail-Codesequenz DS, bestehend aus einer Positions-Codesequenz PS, die die Position der Detailelemente im Rechteckbereich $R_i$ angibt, und einer Wert-Codesequenz WS, die die Werte der Detailelemente in $R_i$ angibt, ggf. verschachtelt mit mit PS und/oder mit der Unscharf-Codesequenz US.

Ein Verfahren zur Erzeugung der Positions-Codesequenz PS besteht darin, daß ein – ggf. um ganzzahlige Faktoren u und w in horizontaler bzw. vertikaler Richtung verkleinertes –

zweifarbiges Abbild des Rechteckbereichs $R_i$, in dem die Detailelemente durch schwarze und und die Grobelemente sowie die Restelemente durch weiße Bildelemente ersetzt sind, mit einem Zweifarbencode codiert wird, beispielsweise mit einem der in "Draft Recommendation T.b (2nd issue), CCITT Temporary Document No. 28, Geneva 1983" beschriebenen Codes. Im Falle einer Verkleinerung wird dabei vorausgesetzt, daß in $R_i$ die vertikalen Grenzen des Detailbereichs in jeweils w aufeinanderfolgenden Zeilen und die horizontalen Grenzen in jeweils u aufeinanderfolgenden Spalten übereinstimmen.

Runden:

Ein derartig begrenzter Detailbereich kann von einem anderen (primären) Detailbereich durch Runden hergeleitet werden. Dabei wird beispielsweise jeweils ein Feld von u×w Flächenelementen dann dem gerundeten Detailbereich zugeordnet, wenn eine Mindestzahl k ($\geq$ 1) der in diesem Feld enthaltenen Flächenelemente dem primären Detailbereich angehört.

Fig. 3 zeigt dafür ein Beispiel mit k=1, und zwar sind die Flächenelemente eines durch Runden (mit u=2 und w=3) aus dem mit Punkten markierten Detailbereich hergestellten Detailbereichs durch ein Punktmuster gekennzeichnet.

Für die Positionierung des Rasters der u×w-Felder (Rundungsfelder) gilt sinngemäß das gleiche wie für die Mittelpunktraster, d.h. stoßfreie Fortsetzung in benachbarten Rechteck- bzw. Halbtonbereichen – wie in Fig. 4 angedeutet – ist zu bevorzugen.

Ein Verfahren zur Erzeugung der Wort-Codesequenz WS besteht darin, daß ein zweifarbiges Abbild des Rechteckbereichs $R_i$, worin die Detailelemente abhängig von ihrem Luminanzwert durch schwarze oder weiße und und die Grobelemente sowie die Restelemente durch weiße Bildelemente ersetzt sind, mit einem Zweifarbencode codiert wird, beispielsweise mit einem der in "Draft Recommendation T.b (2nd issue), CCITT Temporary Document No. 28, Geneva 1983" beschriebenen Codes. In besonders einfacher Weise kann WS durch Aneinanderreihen der Codeworte erzeugt werden, die zur Vorcodierung der mit Detailelementen zusammenfallenden Abtastwerte A(x,y) verwendet wurden.

Eine vereinfachte Form der Farbcodierung besteht darin, daß in WS lediglich die Luminanz der Abtastwerte codiert und bei einer folgenden Rekonstruktion des Faksimile aus den codierten Daten die Chrominanz dieser Bildelemente aus der Unscharf-Codesequenz US entnommen wird.

Ein Speicherplatz sparendes Verfahren zur Verschachtelung der Sequenzen US, PS und WS besteht darin, daß jeweils m Zeilen von US, n Zeilen von PS und n×w Zeilen von WS (in im übrigen beliebiger Reihung) aufeinanderfolgen, wobei unter einer "Zeile" derjenige Teil der jeweiligen Codesequenz verstanden wird, der einer Zeile von Bildelementen in $R_i$ zugeordnet ist; w (≧1) ist der oben erwähnte vertikale Verkleinerungsfaktor, und n eine beliebige Zahl ≧1.

Falls für die Unscharfcodierung das zuvor beschriebene Verfahren angewendet wird, ist es in Hinblick auf geringen Speicherbedarf vorteilhaft, das Verhältnis m:(n×w) = 1:v zu wählen, wobei v entsprechend dieser Beschreibung definiert ist.

Verfahren zum automatischen Finden eines Detailbereichs

Für ausgewählte – vorzugsweise in einem quadratischen Raster angeordnete – Flächenelemente (sogenannte Prüfpunkte) wird jeweils ein Detailkriterium erzeugt, dessen Wert angibt, ob der betreffende Prüfpunkt im Detailbereich enthalten ist oder nicht.

Flächenelementen, die keine Prüfpunkte sind, wird das endgültige Detailkriterium durch Interpolation aus den Detailkriterien der umliegenden Prüfpunkte erzeugt.

Ein besonders einfaches Interpolationsverfahren besteht darin, daß dem betreffenden Flächenelement das Detailkriterium des nächstgelegenen oder – falls diese Angabe nicht eindeutig ist – eines der nächstgelegenen Prüfpunkte zugeordnet wird.

Zusätzlich zu diesem (dem ersten) Detailkriterium können weitere (zusätzliche) Detailkriterien für ggf. nach anderen Gesichtspunkten ausgewählte Prüfpunkte in der gleichen Weise wie das erste Detailkriterium erzeugt werden. Nach dem gleichem Muster können Nicht-Prüfpunkten zusätzliche Detailkriterien zugeordnet werden. Das endgültige Detailkriterium wird dann durch Kombination der Einzelkriterien (des ersten Detailkriteriums und der zusätzlichen Detailkriterien) gebildet.

Ein einfaches Kombinationsverfahren besteht darin, daß die Einzelkriterien als Wahrheitswerte interpretiert werden und das endgültige Detailkriterium durch logisches Odern der Einzelkriterien erzeugt wird.

Im folgenden werden zwei Varianten zur Erzeugung eines Detailkriteriums in Form eines Wahrheitswerts beschrieben. Sie werden als Grob- bzw. Feinstrukturkriterium bezeichnet und haben entweder den Wert "Wahr" oder dem Wert "Falsch", können also jeweils durch 1 bit codiert werden. Das erste kann beispielsweise als primäres und das zweite als zusätzliches Detailkriterium verwendet werden.

### Grobstrukturkriterium:

Die Steigung des Luminanzmittelwerts YM(x,y) – der ggf. mit einer linearen Funktion des Abtastmittelwerts AM(x,y) identisch ist– wird mit einem empirisch ermittelten Schwellwert SW verglichen. Das Detailkriterium hat den Wert "Wahr", wenn eine monoton ansteigende Funktion der Steigung, z.B. die Steigung selbst oder ihr Quadrat, größer als die gleiche Funktion des Schwellwerts ist.

Unter "Steigung" wird dabei eine Approximation des Betrags des Gradienten von YM(x,y) verstanden. Beispielsweise ist unter den in der Beschreibung des Verfahrens zur unscharfen Transformation gegebenen Voraussetzungen eine geeignete Approximation durch folgende Formel definiert, die das Quadrat q(x,y) der Steigung im Punkt (x,y) angibt:

$$q(x,y) = 2 \times (A(x-c,y-c) - A(x+c,y+c))^2 + 2 \times (A(x-c,y+c) - A(x+c,y-c))^2 +$$

$$+ (A(x-d,y) - A(x+d,y))^2 + (A(x,y-d) - A(x,y+d))^2 .$$

Die Parameter c und d haben hier die gleiche Bedeutung wie in der Beschreibung des Verfahrens zur unscharfen Transformation. Eine zeitsparende Realisierung dieser Funktion ist mit integrierten Bausteinen oder besonderen Signalprozessoren möglich.

Unter den gleichen Voraussetzungen wie bei der Erzeugung der Abtastmittelwerte AM(x,y) entsprechend der zuvor angegebenen Formel empfiehlt es sich, auch für die Erzeugung der Werte q(x,y) anstelle der Abtastwerte A(x′,y′) eine beschränkt unscharfe Transformation der Abtastwerte zu verwenden.

Das Raster der Prüfpunkte, die zur Erzeugung des Grobstrukturkriteriums verwendet werden, wird vorteilhafterweise identisch mit dem Raster der Mittelpunkte gewählt, ggf. ergänzt durch jeweils einen zusätzlichen Prüfpunkt zwischen zwei horizontal benachbarten Mittelpunkten.

0163898

24 P 1 337 E

Feinstrukturkriterium:

Ein Adreßbilder erzeugt aus einer Auswahl von Abtastwerten aus der Umgebung des Prüfpunkts eine Adresse und übergibt sie einem Datenspeicher, der am adressierten Speicherplatz das mit 1 bit codierte für die jeweilige Abtastwertkombination gültige Detailkriterium enthält.

Die Füllung des Datenspeichers kann experimentell – durch subjektive Beurteilung simulierter Muster – oder mit Hilfe einer programmierbaren Funktion der beteiligten Abtastwerte in einem einmaligen Zeitaufwand erfolgen. So lassen sich auch komplizierte Zusammenhänge realisieren.

Ggf. genügt es, die Adresse aus den auf 1 bit quantisierten Luminanzwerten der in einem Bereich befindlichen Flächenelemente zu bilden, der höchstens die doppelte Fläche einer zweidimensionalen Halbtonrasterperiode hat, also die Fläche $2 \times a^2$, wenn a der Rasterpunktabstand ist. Zumindest bei Schwarz/Weiß-Halbtonrastern genügt es beispielsweise, den Wahrheitswert mindestens einer der beiden folgenden Bedingungen zu ermitteln:

(I) Die mittlere Luminanz dieses Bereichs weicht sowohl von "Weiß" als auch von "Schwarz" um weniger als eine empirisch ermittelbare Schranke d ab.

(II) In diesem Bereich oder an seinem Rande befinden sich Halbtonrasterpunkte, die mit benachbarten Halbtonrasterpunkten gleicher Farbe zusammenhängen.

– Sind beide Bedingungen (I) und (II) wahr, dann ist der Wert des Detailkriteriums "Wahr".

Der Speicheraufwand für diesen einfachen Feinstrukturdetektor ist unerheblich; ein in einer typischen Tageszeitung gedrucktes Halbtonbild enthält im Bereich einer Halbton–Rasterperiode, ds. $0,4 \times 0,4$ mm², lediglich $(0,4/0,125)^2 = 10$ Gruppe–3–Abtastwerte.

Das Raster der Prüfpunkte, die zur Erzeugung des Feinstrukturkriteriums verwendet werden, sollte mindestens so dicht wie das Raster der Prüfpunkte für das Grobstrukturkriterium, und vorteilhafterweise mit diesem identisch gewählt werden.

Verfahren zur Konturcodierung:

Die Grenzen des Halbtonbereichs $H_i$ werden in der gleichen Weise codiert wie die Grenzen des Detailbereichs, ggf. mit Rundungsfeld-Abmessungen u' und w' anstelle von u und w, und die erzeugte Codesequenz wird ggf. mit den übrigen Codesequenzen verschachtelt, vorzugsweise derart, daß vor oder nach n×w Zeilen von WS n×w/w' Zeilen von der durch die Konturcodierung erzeugten Codesequenz KS eingefügt werden; n ist dann so zu wählen, daß dies eine ganze Zahl ist.

Synchronisierung der Subcodes:

Sämtliche Codeparameter, die nicht implizit festgelegt sind (wie etwa die in einem Code .gemäß "Draft Recommendation T.b (2nd issue), CCITT Temporary Document No. 28, Geneva 1983" verwendete Codetabelle), oder pauschal für das gesamte Faksimile, wie etwa ein Mittelpunkts- oder Rundungsraster, sind an vereinbarter Stelle in einem vereinbarten Code zu übertragen. Dazu gehören beispielsweise die in dem zuvor beschriebenen Verfahren zur Auswahl der Mittelpunkte für die Unscharfcodierung erwähnten Parameter h und v, die Rasterorientierung (45° oder 90°) sowie die Rasterposition, gegeben z.B. durch die auf den Rechteckbereich $H_i$ bezogene Position des ersten Mittelpunkts der obersten Mittelpunktreihe (in Fig. 3: (1,1). Wegen des geringen Informationsgehalts dieser Parameter sind sowohl Position als auch Codierung für die erreichbare Datenkompression weitgehend ohne Belang.

Es empfiehlt sich jedoch, diese Parameter verschachtelt mit den übrigen Codesequenzen des jeweiligen Halbtonbereiches zu übertragen, vorzugsweise in Form der Parameter-Code-sequenz

<id><param>

zu verwenden, worin <id> ein vereinbartes Codewort ist, das die Bedeutung und Anzahl der fogenden Parameter (z.B. "zwei Koordinaten des ersten Mittelpunkts") identifiziert (und bei Computerbefehlen dem Operator entspricht), während <param> die Folge dieser Parameter bedeutet, etwa die beiden Zahlen "1" und "1", jeweils mit 16 bit codiert. Dieses Verfahren hat den Vorteil, daß die jeweilige Parameter-Codesequenz weggelassen werden kann. In diesem Falle wird vom Decoder für die betroffenen Parameter je nach Vereinbarung ein vordefinierter oder der zuletzt definierte Wert eingesetzt.

In einem derartigen Parameterformat dieser Art kann auch festgelegt werden, ob Mittelpunkte, die sich zwar im Rechteckbereich $R_i$, nicht aber im Halbtonbereich $H_i$ befinden, in der

Unscharf—Codesequenz US vertreten sein sollen oder nicht. Im ersten Fall würde die oberste Mittelpunktreihe und der erste Mittelpunkt der folgenden Reihe des in Fig. 3 dargestellten Musters übertragen, im zweiten Fall nicht.

Aus Gründen der Vereinfachung und in Hinblick auf dem Umstand, daß die Rechteckbereiche mehrheitlich ganz oder fast ganz vom eingeschlossenen Halbtonbereich ausgefüllt sein dürften, empfiehlt es sich, in US sämtliche in $R_i$ enthaltenen Mittelpunkte ggf. (z.B. bei DPCM) ergänzt durch Zusatzinformation, in die Codierung einzubeziehen. Ein Kompromißlösung besteht darin, für die Interpolation bei der Rekonstruktion benötigte außerhalb von $H_i$ befindliche Mittelpunkte zu übertragen, z.B jeden Mittelpunkt, der – in vertikaler oder horizontaler Richtung – um weniger als h Flächenelemente von $H_i$ entfernt ist.

Entsprechende Überlegungen gelten für die Detailcodierung insbesondere im Falle einer Rundung, für die zuvor ein Verfahren beschrieben wurde, falls die Grenzen der Rundungsfelder nicht mit den Grenzen von $R_i$ übereinstimmen, wie in Fig. 3. Die beiden folgenden Alternativen (I) und (II) werden bevorzugt in Betracht gezogen:

(I) Die Grenzen von $R_i$ werden auf Rundungsfeldgrenzen gerundet, d.h. diesen angeglichen.

(II) Nicht gänzlich in $R_i$ enthaltene Rundungsfelder bzw. die darin enthaltenen Detailelemente werden nicht berücksichtigt.

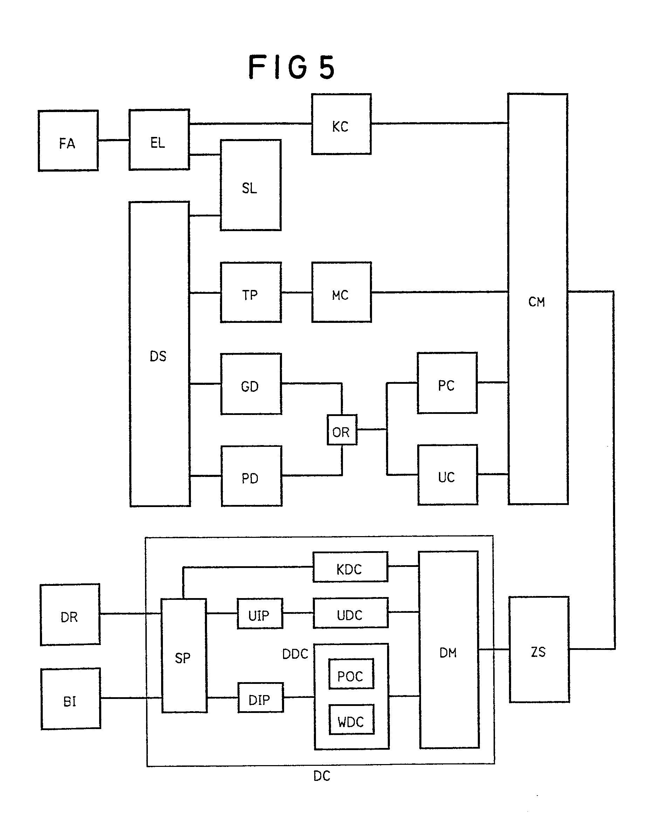

Im folgenden wird ein bevorzugtes Ausführungsbeispiel zur Durchführung des erfindungsgemäßen Verfahrens anhand von Fig. 5 beschrieben.

Eine Erkennungslogik EL untersucht die von einem Faksimileabtaster FA ausgegebenen Abtastwerte auf das Vorhandensein von Rechteckbereichen mit Halbtoninhalt. Ist ein solcher Bereich $R_i$ gefunden, so speichert eine Steuerlogik SL seine Lage, seinen Inhalt und ggf. die Kontur des darin enthaltenen Halbtonbereichs in einem Datenspeicher DS, der ein Teil eines Mehrzweckspeichers – beispielsweise des Arbeitsspeichers eines Prozessors – sein kann, und veranlaßt die Codierung des Bereichs einschließlich der Zufuhr der erforderlichen Taktinformation.

Ein spatialer Tiefpaß TP entnimmt aus dem Datenspeicher DS vorcodierte Abtastwerte, unterwirft sie einer unscharfen Transformation und übergibt das Ergebnis einem Mittelwertcoder MC, dessen Ausgang an einen Codemultiplexer CM angeschlossen ist.

Gleichzeitig oder zeitlich verschachtelt mit der unscharfen Transformation – nach Maßgabe der verwendeten Steuerlogik – entnehmen ein Grobstrukturdetektor GD und ein Feinstrukturdetektor FD dem Datenspeicher DS Abtastwerte und geben jeweils ein Detailkriterium (nämlich ein Grob- bzw. ein Feinstrukturkriterium wie zuvor beschrieben) über ein OR-Gatter OR an einen Positionscoder PC und an einen Wertcoder WC, dessen zweiter Eingang ebenfalls an den Datenspeicher DS angeschlossen ist. Die Ausgänge beider Coder werden an den Codemultiplexer CM geführt. Ein weiterer Eingang des Codemultiplexers CM erhält den codierten Verlauf der Grenzen von $H_j$ über einen Konturcoder KC, dessen Eingang entweder an den Datenspeicher DS oder (wie dargestellt) unmittelbar mit der Erkennungslogik EL verbunden ist. Der Codemultiplexer führt die Verschachtelung der an seinen Eingängen übergebenen Codesequenzen durch.

Die codierten Daten gelangen über einen Zwischenspeicher ZS, einem Demultiplexer DM und einen Decoder DC zu zwei Reproduktionseinheiten, nämlich einem Drucker DR und einem Bildschirm BI.

Der Decoder DC enthält für jeden empfangenen Subcode eine besondere Funktionseinheit, d.s. ein Konturdecoder KDC, ein Unscharfdecoder UDC und ein Detaildecoder DDC, der selbst aus einem Positionsdecoder PDC und einem Wertdecoder WDC besteht, ferner Interpolatoren UIP und DIP, die die von dem Unscharfdecoder UDC ausgegebenen Abtastmittelwerte bzw. die von dem Detaildecoder DDC ausgegebenen Detailelemente über dem von der Reproduktionseinheit geforderten Raster (das i.allg. nicht mit den Abtastraster identisch ist) interpolieren, und eine Superpositionsschaltung SP, die die Ausgangssignale der Interpolatoren UIP und DIP überlagert. Die Art der Überlagerung ist im allgemeinen exklusiv, d.h. am Ausgang der Superpositionsschaltung SP erscheint der Ausgangswert eines der Interpolatoren UIP und DIP, kann aber durch die Art der Codierung auch anders festgelegt sein, beispielsweise dahingehend, daß Luminanz- und Chrominanzwerte des Detailbereichs verschiedenen Interpolatoren, nämlich DIP bzw. UIP, entnommen werden.

0163898

84 P 1 3 3 7 E

## Codierbeispiel

Das folgende Beispiel zeigt die Codierung des in Fig. 3 dargestellten Halbtonbereichs – wobei Kontur-, Unscharf-, Positions- und Wert-Codesequenzen verschachtelt sind – für eine Schachtelungsperiode. Dabei werden folgende Parameterwerte angenommen:

$h=4, v=2, m=3, n=2, w=3$;

die Schachtelungsperiode umfaßt somit 6 Faksimilezeilen. Bezüglich der Bedeutung der Parameterbezeichnungen h, v usw. sowie sonstiger hier nicht erklärter Bezeichnungen wird auf den Beschreibungsteil verwiesen.

Es wird ein Konturcode nach dem Muster des Positionscode verwendet, mit dem Rundungs-feld $u'×w'$ an Stelle von $u×w$. Hier wird $u'=w'=1$ angenommen.

Die verschachtelten Codesequenzen lauten in symbolischer Schreibweise:

```
<R>  21   15   800  1630
<H>  <h>
<K>   1    1    0    0    6
      21w
      21w
       5w   4s   7w   2s   3w
       5w   6s   5w   3s   2w
       4w   9s   3w   3s   2w
       4w   9s   3w   3s   2w
  <U>  4    2    1    1    3
       3d   7d  11d  15d  19d
       9d  13d  17d  21d  25d
      11d  15d  19d  23d  27d
<P>   2    3    1    1    2
      3w   1s   4w   1s
      2w   3s   5w
  <W>  6
      4w
      0w   1s   3w
      0w   4s
      3w   1s   2w
```

0163898

84 P 1337 E

```
        2w  3s
        1w  1s  2w  1s  1w
<K>     1   1   0   0   6
        3w 20s  4w  3s  1w      .....u. s. w.
```

Erläuterungen zum Codierbeispiel:

<..> bedeutet einen Subcode-Schalter, d.i. ein festgelegtes Codewort, das einen bestimmten Subcode (z.B. Unscharfcode, Positionscode usw.) identifiziert.

Eine Zahl ohne nachgestellten Buchstaben bedeutet eine Zahl in einem festgelegten Format, z.B. ein 16-bit-Datenwort.

Die Zwischenräume und die zeilenweise Anordnung dienen lediglich der optischen Darstellung; sie haben weiter keine Bedeutung.

<R>    bedeutet "Code für Rechteckbereich", beispielsweise "0000001110". Der Decoder erwartet nach diesem Codewort vier Zahlen (21,15,800,1630), die die Breite und Höhe des Bereichs und die Lage des Rechteckbereichs im Faksimile (durch die Koordinaten der linken oberen Ecke) in Flächenelementen angeben.

<H>    bedeutet "Code für Halbtonbereich". Dafür könnte beispielsweise das in "Draft Recommendation T.b (2nd issue), CCITT Temporary Document No. 28, Geneva 1983" reservierte 10-bit-Codewort "0000001001" verwendet werden. GGf. kann anschließend ein Folge von Zusatzparametern (durch <h> angedeutet) angegeben werden, beispielsweise die folgenden Subcode-Schalter und ihre Parameter, die dann nicht in jeder Codesequenzperiode wiederholt werden müssen.

Für die Subcode-Schalter (<K>, <U>, <P>, <W> können durchaus Codeworte wiederverwendet werden, die in anderer Bedeutung vor <H> auftreten können, z.B. alle nicht anderweitig (z.B. für die unten erwähnte Umschaltung in den "non compressed mode" nach <W> ) benötigten Kombinationen von "0000001xxx" (x beliebige Binärziffer). Das gleiche gilt für Codeschalter, die ggf. nach den Subcode-Schaltern autreten und Varianten des jeweiligen Subcode darstellen.

\<K> bedeutet "Code für Konturbereich". Der Decoder erwartet nach diesem Codewort die Parameter:

    (1,1   Breite und Höhe des Rundungsfeldes (0,0) Koordinaten der linken oberen Ecke des ersten Rundungsfeldes (-1,-1) würde bedeuten "globale Koordinaten übernehmen"

    (6)   Anzahl der folgenden Codezeilen

\<U> bedeutet "Code für Unscharfcodierung". Der Decoder erwartet nach diesem Codewort die Parameter:

    (4,2) h und v

    (1,1) Koordinaten des ersten Mittelpunks

    (3)   Anzahl der folgenden Codezeilen

\<P> bedeutet "Code für Positionscodierung". Der Decoder erwartet nach diesem Codewort die Parameter:

    (2,3) Breite und Höhe des Rundungsfeldes

    (1,1) Koordinaten der linken oberen Ecke des ersten Rundungsfeldes

    (2)   Anzahl der folgenden Codezeilen

\<W> bedeutet "Code für Wortcodierung". Der Decoder erwartet nach diesem Codewort als Parameter die Anzahl (6) der folgenden Codezeilen.

Im Anschluß an die jeweiligen Parameter folgen die Codezeilen selbst. Im Beispiel bedeutet iw das Codewort für i weiße und is das Codewort für i schwarze Flächenelemente gemäß einem für die jeweilige Codierung vorgesehenen Code.

Ist dieser Code beispielsweise der Code nach "Standardization of Group 3 Facsimile Apparatus for Document Transmission T4, CCITT Yellow Book 1981, p. 232-236" mit k=1, dann ist 5w = "1100" und 4s = "011".

Besonders geeignet ist der Code nach "Draft Recommendation T.b (2nd issue), CCITT Temporary Document No. 28, Geneva 1983". Dieser Code schließt die Möglichkeit ein, durch Einfügen des Codeworts "0000001111" den sogenannten "non compressed mode" einzu-

0163898

P 1337 E

schalten. Diese Möglichkeit wird vorzugsweise für die Wertcodierung (nach <W>) in Betracht gezogen.

In der Folge "3d 7d …" bedeutet id die Codierung des Abtastmittelwerts i mit einem geeigneten Unscharfcode, vorzugsweise mittels DPCM, beispielsweise durch 4-bit-Worte, die die auf den Bereich (-8..+7) beschränkte Differenz zum vorhergehenden decodierten Wert angeben, also 3d 7d 11d 15d 19d = "0011 0100 0100 0100 0100".

Die Folge dieser Abtastmittelwerte wurde der willkürlichen Formel

$$AM(x,y) = x+2y$$

entsprechend ausgewählt. Daß auch Abtastmittelwerte außerhalb des Halbtonbereichs keinen einheitlichen Wert haben (der einer bestimmten Umgebungsfarbe, etwa weiß, entsprechen würde), ist allerdings beabsichtigt, denn auf Grund der verbreiternden Wirkung der unscharfen Transformation trifft dies - wenigstens in der Nähe der Kontur des Halbtonbereichs - im allgemeinen auch für Muster zu, die nicht (wie das in Fig. 3 dargestellte) fingiert sind. Diese Abtastmittelwerte werden auch nach der Decodierung für eine exakte Interpolation der Abtastwerte im konturnahen Halbtonbereich benötigt. Verzichtet man auf eine derart exakte Interpolation, so kann die Codierung dieser Werte entfallen; für die im Beispiel angegebene Unscharf-Codesequenz würde diese den Ersatz durch die Sequenz

13d
15d 19d 27d

bedeuten, was erhebliche Interpolationsfehler zur Folge hätte. In weniger fiktiven Beispielen wären diese Fehler weniger gravierend.

Eine brauchbare Interpolation ist durch einen Kompromiß möglich, z.B. werden Abtastmittelwerte nur dann nicht übertragen, wenn die jeweiligen Mittelpunkte um mindestens h Flächenelemente in horizontaler und um mindestens v Flächenelemente in vertikaler Richtung vom nächsten im Halbtonbereich befindlichen Flächenelement entfernt sind. Die im Beispiel angegebene Codesequenz würde sich dann auf die Sequenz

7d 11d    19d
9d 13d 17d 21d 25d
11d 15d 19d 23d 27d

verkürzen. Es müßten somit nur 13 anstatt 15 Abtastmittelwerte codiert werden. Eine derartige Ersparnis ist unerheblich und lohnt nicht den Aufwand für die damit verbundene Komplizierung des Code, auch wenn ggf. nur dann auf Codierung von Abtastmittelwerten verzichtet wird, falls sich die jeweiligen Mittelpunkte im Randbereich befinden. Die erste Codezeile wäre dann 7d 11d 15d 19d .

Eine wesentliche Einsparung von Codebits würde diese Codevariante nur bei solchen Faksimiletypen bringen, bei denen die Flächen der Halbtonbereiche im Mittel erheblich kleiner als die Flächen der umschriebenen Rechteckbereiche sind.

Unabhängig von Vor- oder Nachteilen irgendwelcher Codevarianten können derartige Varianten durch besondere Codeschalter entweder global (für das ganze Faksimile) oder im Anschluß an die Standardparameter nach <U> vor bzw. innerhalb der Codesequenz angegeben werden.

51 Patentansprüche
5 Figuren

Patentansprüche

1. Verfahren zur Codierung von Faksimiles, die bei der Abtastung von Vorlagen gewonnen werden, die auch Halbtonbereiche – im folgenden auch $H_i$ genannt – enthalten, wobei i die laufende Nummer des jeweiligen Halbtonbereichs innerhalb des zu codierenden Faksimile bzw. der abgetasteten Vorlage ist, bei dem insbesondere zum Zwecke der Beseitigung von Moiré und/oder zum Zwecke einer Datenkompression eine einer gegenüber der Vorlage unschärfere Abbildung entsprechende Codierung der Halbtonbereiche derart durchgeführt wird, daß das sogenannte Halbtonraster unterdrückt wird, dadurch g e k e n n z e i c h n e t, daß innerhalb jeweils eines $H_i$ ein Detailbereich – im folgenden auch $D_i$ genannt – bestimmt und mit einem Detailcode codiert wird, welcher Vorgang im folgenden auch als Detailcodierung bezeichnet wird, und daß zumindest der Restbereich des $H_i$ mit einem Unscharfcode codiert wird, welcher Vorgang im folgenden auch als Unscharfcodierung bezeichnet wird.

2. Verfahren nach Anspruch 1, dadurch g e k e n n z e i c h n e t, daß die Abtastung derart erfolgt, daß jeweils einem Flächenelement der Vorlage ein Abtastwert zugeordnet wird.

3. Verfahren nach Anspruch 1, dadurch g e k e n n z e i c h n e t, daß die durch die Codierung des Detailbereichs $D_i$ erzeugten Daten in eine Detail-Codesequenz – im folgenden auch DS genannnt – und die durch die Codierung des Restbereichs erzeugten Daten in eine Unscharf-Codesequenz –im folgenden auch US genannt – umgesetzt werden und daß die DS und die US sowie ggf. eine Kontur-Codesequenz, im folgenden auch KS genannt, die den Verlauf der Kontur des $H_i$ innerhalb eines Rechteckbereichs – im folgenden auch $R_i$ genant – beschreibt, in dem der $H_i$ enthalten ist, ggf. verschachtelt sowie ggf. unter Zwischenspeicherung zu einer Reproduktions- und/oder Bearbeitungseinrichtung übertragen werden.

4. Verfahren nach Anspruch 1, dadurch g e k e n n z e i c h n e t, daß daß zumindest einer der Detailbereiche durch Vorgabe bestimmt ist.

5. Verfahren nach Anspruch 1, dadurch g e k e n n z e i c h n e t, daß zumindest einer der Detailbereiche automatisch aufgefunden und als solcher bestimmt ist.

6. Verfahren nach einem der vorhergehenden Ansprüche, dadurch g e k e n n z e i c h n e t, daß für ein ausgewähltes, vorzugsweise quadratisches Raster von Prüfpunkten jeweils ein Detailkriterium – im folgenden auch erstes Detailkriterium genannt – pro Prüfpunkt vorzugsweise in Form eines Wahrheitswerts erzeugt wird, dessen Wert angibt, ob der betreffende Prüfpunkt in einem Detailbereich enthalten oder nicht enthalten ist.

7. Verfahren nach Anspruch 6, dadurch gekennzeichnet, daß für mindestens ein zusätzliches, ggf. mit anderen Rastern deckungsgleiches Raster von Prüfpunkten zusätzliche Detailkriterien erzeugt werden.

8. Verfahren nach Anspruch 6 und 7, dadurch gekennzeichnet, daß solchen Flächenelementen, die keine Prüfpunkte sind, das Detailkriterium durch Interpolation aus den Detailkriterien benachbarter Prüfpunkte zugeordnet wird.

9. Verfahren nach Anspruch 8, dadurch gekennzeichnet, daß die Interpolation derart durchgeführt wird, daß dem betreffenden Flächenelement das Detailkriterium des nächstgelegenen – oder, falls diese Angabe nicht eindeutig ist – eines der nächstgelegenen Prüfpunkte nach einem festgelegten Auswahlprinzip zugeordnet wird.

10. Verfahren nach einem der vorhergehenden Ansprüche, dadurch gekennzeichnet, daß für jeweils ein Flächenelement ein kombiniertes Detailkriterium durch Kombination sämtlicher Detailkriterien gebildet wird, die diesem Flächenelement zugeordnet sind.

11. Verfahren nach Anspruch 10, dadurch gekennzeichnet, daß die Kombination derart vogenommen wird, daß das kombinierte Detailkriterium durch logisches Odern des ersten und jedes zusätzlichen Detailkriteriums erzeugt wird.

12. Verfahren nach Anspruch 1 und 2, dadurch gekennzeichnet, daß für ausgewählte Stellen – im folgenden Mittelpunkte genannt – des Rechteckbereichs $R_i$, der einen zu codierenden Halbtonbereich $H_i$ enthält, ggf. unter vollständigem oder teilweisem Ausschluß des Detailbereichs durch eine unscharfe Transformation der Abtastwerte, vorzugsweise durch Bildung eines gewichteten Mittelwerts, die so bemessen ist, daß das Halbtonraster unterdrückt wird, sogenannte Abtastmittelwerte erzeugt und anschließend codiert werden.

13. Verfahren nach Anspruch 12, dadurch gekennzeichnet, daß die Codierung mittels Delta–Pulscodemodulation (DPCM) erfolgt.

14. Verfahren nach Anspruch 12, dadurch gekennzeichnet, daß als Mittelpunkt jedes h—te Flächenelement jeder v—ten Zeile ausgewählt wird, das zumindest im $H_i$ enthalten ist, wobei die Parameter h und v, die jeweils $\geq 1$ sind, abhängig von der Art der angewandten unscharfen Transformation so gewählt werden, daß eine unscharfe Rekonstruktion des betreffenden Halbtonbildes aus den codierten Daten ermöglicht ist.

15. Verfahren nach Anspruch 14, dadurch gekennzeichnet, daß die Mittelpunkte in einem quadratischen Raster angeordnet sind, das parallel bzw. senkrecht bezüglich der Kanten der Vorlage ausgerichtet ist.

16. Verfahren nach Anspruch 14, dadurch gekennzeichnet, daß die Mittelpunkte in einem quadratischen Raster angeordnet sind, das in einem Winkel von 45° bezüglich der Kanten der Vorlage ausgerichtet ist.

17. Verfahren nach Anspruch 14 bis 16, dadurch gekennzeichnet, daß für mehrrere oder alle im Faksimile enthaltenen Halbtonbereiche die Unscharfcodierung mit den gleichen Parametern erfolgt, und daß für diese ein gemeinsames Mittelpunktraster verwendet wird.

18. Verfahren nach Anspruch 1, 2 und 12, dadurch gekennzeichnet, daß die Abtastmittelwerte durch eine gewichtete Mittelung entsprechend der Formel

$$AM(x,y) = 4 \times A(x,y) + 2 \times ((A(x-c,y-c) + A(x-c,y+c) + A(x+c,y-c) + A(x+c,y+c)) +$$
$$+ A(x-d,y) + A(x,y-d) + A(x+d,y) + A(x,y+d)$$

erzeugt werden, worin x und y die Koordinaten des jeweiligen Mittelpunkts sind, $AM(x,y)$ der Abtastmittelwert und $A(x',y')$ der dem Flächenelement mit den Koordinaten $(x',y')$ zugeordnete Abtastwert ist, und c und d ggf. empirisch ermittelte Parameter sind.

19. Verfahren nach Anspruch 18, dadurch gekennzeichnet, daß im Falle eines monochromen quadratischen Halbtonrasters mit dem Rasterpunktabstand a Richtwerte der Parameter c und d durch die Formeln
c = h/4, d = h/2, h = a/dx
bestimmt sind, wobei dx der Abtastpunktabstand ist.

20. Verfahren nach Anspruch 18, dadurch gekennzeichnet, daß im Falle eines monochromen hexagonalen Halbtonrasters mit dem Rasterpunktabstand a Richtwerte der Distanzen c und d durch die Formeln
c = h/4, d = h/2, h = a/dx bestimmt sind, wobei dx der Abtastpunktabstand ist.

21. Verfahren nach Anspruch 18 und 19, dadurch gekennzeichnet, daß im Falle eines Vorliegens unganzzahliger Werte der Koordinaten eines Abtastwertes ein fiktiver Abtastwert durch Interpolation erzeugt wird.

22. Verfahren nach Anspruch 12 und 18, dadurch gekennzeichnet, daß Abtastwerte in Form mehrerer Farbparameter oder Farbanteile, vorzugsweise der aus der Farbfernsehtechnik bekannten Farbparameter $Y(x,y)$, $U(x,y)$ und $V(x,y)$, worin $Y(x,y)$ die Luminanz, $U(x,y)$ und $V(x,y)$ ein erster bzw. zweiter Chrominanzparameter ist, bzw. der additiven Grundfarbwerte $R(x,y)$, $B(x,y)$ und $G(x,y)$, die den Farben Rot, Blau und Grün entsprechen, erfaßt werden und daß für jeweils jeden Farbparameter bzw. Farbanteil Farbmittelwerte durch unscharfe Transformation gebildet und vorzugsweise mittels DPCM codiert werden.

23. Verfahren nach Anspruch 22, dadurch gekennzeichnet, daß die unscharfe Transformation für verschiedene Farbparameter bzw. Farbanteile mit unterschiedlichen Unschärfegraden realisiert wird.

24. Verfahren nach einem der vorhergehenden Anspruch, dadurch gekennzeichnet, daß ausschließlich der für die Luminanz gebildete Farbmittelwert, im folgenden auch Luminanzmittelwert $YM(x,y)$ genannt, codiert wird.

25. Verfahren nach einem der vorhergehenden Ansprüche, dadurch gekennzeichnet, daß aus den Abtastmittelwerten $AM(x,y)$ ggf. auf dem Umweg über die aus den additiven Grundfarbwerten gebildeten Farbmittelwerte $RM(x,y)$, $BM(x,y)$ und $GM(x,y)$ sogenannte aubtraktive Grundfarbmittelwerte $JM(x,y)$, $MM(x,y)$, $CM(x,y)$ und $SM(x,y)$, die den in der Drucktechnik verwendeten Farben Gelb, Magenta, Cyan und Schwarz entsprechen, erzeugt und vorzugsweise mit DPCM codiert werden.

26. Verfahren nach Anspruch 1 bis 3, dadurch gekennzeichnet, daß die Detail-Codesequenz DS durch Erzeugung einer Positions-Codesequenz, im folgenden auch PS genannt, die die Konturen des $D_i$ bzw. die Position der im $D_i$ enthaltenen Flächenelemente – im folgenden auch Detailelemente genannt – im Rechteckbereich $R_i$ angibt, und einer Wert-Codesequenz, im folgenden auch WS genannt, die die den Detailelementen zugeordneten Abtastwerte erfolgt.

27. Verfahren nach Anspruch 26, dadurch gekennzeichnet, daß die PS dadurch erzeugt wird, daß ein zweifarbiges Abbild des $R_i$, in dem die Detailelemente durch schwarze und die übrigen Flächenelemente des $R_i$ durch weiße Bildelemente ersetzt sind, in an sich bekannter Weise mit einem Zweifarbencode codiert wird.

28. Verfahren nach Anspruch 27, dadurch gekennzeichnet, daß die PS dadurch erzeugt wird, daß ein um ganzzahlige Faktoren u und w in horizontaler bzw. vertikaler Richtung verkleinertes zweifarbiges Abbild des $R_i$, in dem die Detailelemente durch schwarze und die übrigen Flächenelemente des $R_i$ durch weiße Flächenelemente ersetzt sind, in an sich bekannter Weise mit einem Zweifarbencode codiert wird, sofern sich der Detailbereich in vertikaler Richtung über Vielfache von w aufeinanderfolgenden Zeilen und in horizontaler Richtung über Vielfache von u aufeinanderfolgenden Spalten erstreckt, worin u und w ganze Zahlen sind.

29. Verfahren nach Anspruch 28, dadurch gekennzeichnet, daß ein Detailbereich, der sich in vertikaler Richtung über Vielfache von w aufeinanderfolgenden Zeilen und in horizontaler Richtung über Vielfache von u aufeinanderfolgenden Spalten erstreckt, von einem anderen (primären) Detailbereich durch Runden hergeleitet wird, wozu beispielsweise jeweils ein Feld von u×w Flächenelementen (Rundungsfeld) dann dem Detailbereich zugeordnet wird, wenn eine vorbestimmte Mindestanzahl k $(\geq 1)$ der in diesem Feld enthaltenen Flächenelemente dem primären Detailbereich angehört.

30. Verfahren nach Anspruch 29, dadurch gekennzeichnet, daß mehrere oder alle im Faksimile enthaltenen Detailbereiche mit den gleichen Abmessungen (u und w) des Rundungsfeldes gerundet werden, und daß für diese ein gemeinsames Rundungsfeldraster verwendet wird.

31. Verfahren nach Anspruch 26, dadurch gekennzeichnet, daß die WS dadurch erzeugt wird, daß ein zweifarbiges Abbild des $R_i$, worin die Detailelemente abhängig von ihrem Luminanzwert durch schwarze oder weiße und die übrigen Flächenelemente des $R_i$ durch weiße Flächenelemente ersetzt sind, in an sich bekannter Weise mit einem Zweifarbencode codiert wird.

32. Verfahren nach Anspruch 26. dadurch gekennzeichnet, daß die WS aus den Abtastwerten, die mit den Detailelementen zusammenfallen, zusammengesetzt wird.

33. Verfahren nach Anspruch 26 bis 32, dadurch gekennzeichnet, daß in der WS lediglich die Luminanz der Abtastwerte codiert wird und daß bei einer folgenden Rekonstruktion des Faksimile die Chrominanz dieser Flächenelemente aus der US ggf. durch Interpolation gewonnen wird.

34. Verfahren nach den Ansprüchen 3 und 25 bis 28, dadurch gekennzeichnet, daß die Kontur des $H_i$ in der gleichen Weise codiert wird wie die Kontur des $D_i$ bzw. daß die KS in der gleichen Weise erzeugt wird wie die PS, ggf. unter Ersatz der Rundungsfeld-Parameter u und w durch andere Werte u' bzw. w'.

35. Verfahren nach den vorhergehenden Ansprüchen, dadurch gekennzeichnet, daß eine Verschachtelung der Sequenzen US, PS, WS und KS darin besteht, daß jeweils m Zeilen von US, n Zeilen von PS, n×w Zeilen von WS und n×w/w' Zeilen von KS (in im übrigen beliebiger Reihung) aufeinanderfolgen, wobei w und w' die Verkleinerungsfaktoren der Rundung des $D_i$ bzw. des $H_i$ in vertikaler Richtung sind, und n eine bis auf die Beschränkung, daß v×m = n×w und n×w/w' ganzzahlig ist, beliebige ganze Zahl $\geq 1$ ist.

36. Verfahren nach Anspruch 10, dadurch gekennzeichnet, daß ein Detailkriterium dadurch erzeugt wird, daß der Wert "Wahr" oder "Falsch" ausgegeben wird, je nachdem ob die Steigung des Luminanzmittelwerts YM(x,y) größer oder kleiner als ein ggf. empirisch ermittelter Schwellwert SW ist, wobei unter "Steigung" eine Approximation des Betrags des Gradienten von YM(x,y) verstanden wird.

37. Verfahren nach den Ansprüchen 18 und 36, dadurch gekennzeichnet, daß die Approximation des Betrags des Gradienten von YM(x,y) durch die Quadratwurzel aus dem Signalwert

$$q(x,y) = 2 \times (A(x-c,y-c) - A(x+c,y+c))^2 + 2 \times (A(x-c,y+c) - A(x+c,y-c))^2 +$$

$$+ (A(x-d,y) - A(x+d,y))^2 + (A(x,y-d) - A(x,y+d))^2$$

bestimmt ist.

38. Verfahren nach Anspruch 10, dadurch gekennzeichnet, daß aus einer Auswahl von Abtastwerten aus der Umgebung des Prüfpunkts eine Adresse erzeugt und einem Datenspeicher zugeführt wird, und daß dem adressierten Speicherplatz des Datenspeichers das für die jeweilige Abtastwertkombination gültige Detailkriterium entnommen wird.

39. Verfahren nach Anspruch 38, dadurch gekennzeichnet, daß die Füllung des Datenspeichers experimentell durch subjektive Beurteilung simulierter Muster vorgenommen wird.

40. Verfahren nach Anspruch 38, dadurch gekennzeichnet, daß die Füllung des Datenspeichers mit Hilfe einer programmierbaren Funktion der beteiligten Abtastwerte erfolgt.

41. Verfahren nach den Ansprüchen 38 und 40, dadurch gekennzeichnet, daß die Adresse aus den auf 1 bit quantisierten Luminanzwerten der Flächenelemente gebildet wird, die sich in einem Bereich befinden, dessen Größe das Ein- bis Zweifache einer zweidimensionalen Halbtonrasterperiode ist.

42. Verfahren nach Anspruch 41. dadurch gekennzeichnet, daß ein Detailkriterium d durch erzeugt wird, daß der Wert "Wahr" ausgegeben wird, falls die mittlere Luminanz dieses Bereichs sowohl von "Weiß" als auch von "Schwarz" um weniger als eine empirisch ermittelbare Schranke d abweicht, und sich außerdem in diesem Bereich oder an seinem Rande Halbtonrasterpunkte befinden, die mit benachbarten Halbtonrasterpunkten gleicher Farbe zusammenhängen, und daß ansonsten der Wert "Falsch" ausgegeben wird.

43. Verfahren nach einem der vorhergehenden Ansprüche, dadurch gekennzeichnet, daß zumindest ein Teil der den Codesequenzen US, PS, WS und KS zugeordneten Parameter (u,v,w usw.) pauschal für das gesamte Faksimile festgelegt ist.

44. Verfahren nach Anspruch 43, dadurch gekennzeichnet, daß zumindest ein Teil der den Codesequenzen US, PS, WS und KS zugeordneten Parameter (u,v,w usw.) verschachtelt ι diesen Codesequenzen übertragen wird.

45. Verfahren nach Anspruch 43, dadurch gekennzeichnet, daß zumindest ein Teil der den Codesequenzen US, PS, WS und KS zugeordneten Parameter (u,v,w usw.) vor den jeweiligen Codesequenzen, ggf. am Beginn des Faksimile, übertragen wird.

46. Verfahren nach den Ansprüchen 43 bis 45, dadurch gekennzeichnet, daß die Übertragung bestimmter Parameter im Anschluß an ein vereinbartes Codewort erfolgt, das den Typ bzw. die Bedeutung der folgenden Parameter identifiziert, beispielsweise "Koordinaten des ersten Mittelpunkts", wobei im Falle des Fehlens eines derartigen Codeworts für die betroffenen Parameter je nach Vereinbarung ein vordefinierter oder der zuletzt definierte Wert eingesetzt wird.

47. Verfahren nach Anspruch 12 und einem der folgenden Ansprüchee, dadurch gekennzeichnet, daß die Bestimmung von Mittelpunkten sowie die Erzeugung und Codierung von Abtastmittelwerten für diese Mittelpunkte für den gesamten Rechteckbereich $R_i$ erfolgt, in dem sich der jeweils zu codierende Halbtonbereich $H_j$ befindet.

48. Verfahren nach Anspruch 12 und einem der folgenden Ansprüchee, dadurch gekennzeichnet, daß die Bestimmung von Mittelpunkten sowie die Erzeugung und Codierung von Abtastmittelwerten nur für diejenigen Mittelpunkte erfolgt, die für die Interpolation bei der Rekonstruktion benötigt werden, vorzugsweise für die in $H_j$ befindlichen Mittelpunkte sowie für diejenigen der außerhalb von $H_j$ befindlichen Mittelpunkte, die – in vertikaler oder horizontaler Richtung – um weniger als h Flächenelemente von $H_j$ entfernt sind.

49. Verfahren nach Anspruch 29 und einem der folgenden Ansprüche, dadurch gekennzeichnet, daß ein $R_i$ aus einem vorgegebenen sogenannten primären Rechteckbereich $R_i$ durch Runden seiner Konturen auf Konturen der Rundungsfelder abgeleitet wird.

50. Verfahren nach Anspruch 49, dadurch gekennzeichnet, daß bei der Rundung nicht gänzlich in primären Rechteckbereich $R_i$ enthaltene Rundungsfelder nicht berücksichtigt werden.

51. Verfahren nach den Ansprüchen 18 und 37, dadurch gekennzeichnet, daß anstelle jeweils eines Abtastwerts $A(x',y')$, worin $x'$ und $y'$ die Koordinaten des Abtastwerts sind, eine beschränkt unscharfe Transformation $A'(x',y')$ der aus der Umgebung des Punktes $(x',y')$ stammenden Abtastwerte verwendet wird.

FIG 1

a

FIG 2

FIG 3

FIG 4

FIG 5